# EUROPÄISCHE PATENTSCHRIFT

(11) **EP 0 550 545 B1**
(45) Veröffentlichungstag und Bekanntmachung des Hinweises auf die Patenterteilung: **06.04.1994**
(21) Anmeldenummer: 91916958.1
(22) Anmeldetag: 25.09.1991
(51) Int. Cl.: G06K 7/00, G06K 13/08, G06K 7/06, G07G 1/00

(54) **VORRICHTUNG ZUM AUFNEHMEN VON KARTEN MIT INTEGRIERTEN SCHALTKREISEN**
DEVICE FOR RECEIVING INTEGRATED CIRCUIT CARDS
DISPOSITIF DE RECEPTION DE CARTES A CIRCUITS INTEGRES

(30) Priorität: 26.09.1990 DE 4030455
(43) Veröffentlichungstag der Anmeldung: 14.07.1993
(73) Patentinhaber: Siemens Nixdorf Informationssysteme Aktiengesellschaft, 33102 Paderborn (DE)
(72) Erfinder: BAITZ, Günter, D-1000 Berlin 27 (DE); BURCHART, Joachim, D-4797 Schlangen (DE)
(74) Vertreter: Fuchs, Franz-Josef, Dr.-Ing.
(86) Internationale Anmeldenummer: EP9101822
(87) Internationale Veröffentlichungsnummer: WO9205512

(56) Entgegenhaltungen:
- EP-A- 0 336 329
- EP-A- 0 336 330
- EP-A- 0 385 022
- US-A- 4 220 991

## Beschreibung

Die Erfindung bezieht sich auf eine Vorrichtung zum Aufnehmen von Karten mit integrierten Schaltkreisen nach dem Oberbegriff des Patentanspruchs 1 .

Es sind bereits ganz allgemein Vorrichtungen bekannt, bei denen die Karte so weit in die schlitzförmige Führung eingesteckt wird, bis sie an einen mechanischen Widerstand anstößt. Beim weiteren Einschieben der Karte wird der Widerstand überwunden und die Karte mit einer vorbestimmten Kraft weiter in die schlitzförmige Führung eingeschoben, wobei ein elektrischer und/oder mechanischer Kontakt zwischen der Karte und den Signalübermittlungselementen des Halters hergestellt wird. In einer solchen Vorrichtung wird die Karte nur unzuverlässig in ihrer Betriebsstellung gehalten. Außerdem hat eine solche Vorrichtung keine Sicherung gegen eine Entnahme.

Das deutsche Gebrauchsmuster G 89 02 736.1 zeigt bereits eine Vorrichtung der im Oberbegriff des Anspruches 1 genannten Art, bei welcher die in ihre Einsteckfächer eingesteckten Karten über eine allen Karten gemeinsame bewegliche Einsteckhalterung vollständig in die Einsteckfläche einziehbar und zusätzlich mittels eines mit der Einsteckhalterung mechanisch gekoppelten Deckels abdeckbar sind. Diese Vorrichtung ist konstruktiv und baulich sehr aufwendig und erlaubt beispielsweise nicht den Eingriff auf einzelne Karten, ohne daß damit gleichzeitig auch die Sicherung aller anderen Karten aufgegeben wird.

Aus der US-A 4 220 991 ist bereits eine Vorrichtung der im Oberbegriff des Anspruchs 1 genannten Art bekannt. Die Riegel sichern die Karten gegen Herausfallen oder auch gegen ein unbeabsichtigtes Entfernen der Karten, da zum Entfernen der Karten jeweils die zugeordneten Riegel aktiv gelöst werden müssen. Die Riegel können die Karten jedoch nicht gegen beabsichtigte Entnahme sichern. In vielen Fällen, beispielsweise bei Kassensystemen, ist es jedoch erwünscht, daß bestimmte Karten jeweils nur von bestimmten, berechtigten Personen entnommen werden können.

Es ist die Aufgabe der vorliegenden Erfindung, eine Vorrichtung der im Oberbegriff des Anspruchs 1 beschriebenen Art zu schaffen, die bei einfacher Konstruktion eine zusätzliche Sicherung der Karten gegen unbefugte Entnahme gewährleistet.

Diese Aufgabe wird erfindungsgemäß durch eine Vorrichtung mit den Merkmalen des Patentanspruchs 1 gelöst.

Eine derartige Vorrichtung wird beispielsweise in Registrierkassen verwendet. Die verriegelbaren Karten können in diesem Fall eine Firmenkarte zum Anmelden einer Kassierperson an der Registrierkasse und zum Einschalten der Betriebsfunktionen der Registrierkasse, eine Geschäftsführer-Karte oder eine sogenannte Memory-Fiscal-Karte zum Speichern und Auslagern von in der Registrierkasse gespeicherten, für die Finanzbehörden relevanten Informationen sein.

Erfindungsgemäß ist der Verriegelungseinrichtung eine abschließbare, auf wenigstens einen Riegel wirkende Sperreinrichtung zugeordnet, die aus einer eine Bewegung des Riegels aus der Verriegelungsstellung in einen eine Bewegung des Riegels freigebende Freigabestellung und umgekehrt bewegbar ist. Dadurch können die einzelnen Karten unterschiedlich stark gesichert sein, so daß bestimmte Karten nur von ausgewählten Personen aus der Vorrichtung entnommen werden können. Die Sperreinrichtung verhindert oder gestattet je nach ihrer Stellung ein Betätigen des Hebels, wobei es ohne weiteres möglich ist, daß bestimmte Karten jederzeit, d.h. unabhängig von der Stellung der Sperreinrichtung, andere nur in Abhängigkeit der Stellung der Sperreinrichtung in die Schiebeführung des Rahmens eingesteckt bzw. aus dieser entnommen werden können.

Bei einer ersten Ausführungsform ist die Sperreinrichtung ein mit einem Schloß versehener Schieberiegel, der bei der Verriegelungsstellung des jeweiligen Riegels in dessen Schwenkbereich bzw. aus diesem heraus bewegbar ist. Bei dieser Ausführungsform kann jeder einzelne Hebel durch einen Schieberiegel beaufschlagt sein, so daß bestimmte Karten nur von solchen Personen eingesteckt bzw. entnommen werden können, die einen dem Schloß entsprechenden Schlüssel haben.

Bei einer anderen Ausführungsform hat die Sperreinrichtung einen einzigen Schieberiegel mit einem Nockenprofil mit jeweils einzelnen Riegeln zugeordneten Nocken, die bei der Verriegelungsstellung des Riegels in dessen Schwenkbereich bzw. aus diesem heraus bewegbar sind, wobei das Nockenprofil mittels einer Betätigungsvorrichtung verschiebbar sein kann. Die Betätigungsvorrichtung hat vorzugsweise einen mit einem Schloß versehenen Schwenkarm und einen mit dem Schieberiegel verbundenen Stift, an dem der Schwenkarm angreift. Die Verwendung eines Schloßriegels mit Nockenprofil hat den Vorteil, daß dieses auf mehrere Hebel wirkend mit nur einer Betätigungsvorrichtung und damit mit nur einem Schlüssel betätigt werden kann. Vorzugsweise hat der Schwenkarm zur Aufnahme des Stiftes einen Führungsschlitz oder eine längliche Ausnehmung, so daß eine Schwenkbewegung des Schwenkarmes einfach in eine Verschiebebewegung des Schieberiegels umgesetzt werden kann. Die dabei in bezug auf die Schwenkachse des Schwenkarmes auftretende radiale Verschiebung des Stiftes kann besonders einfach von dem Führungsschlitz, der länglichen Ausnehmung oder einem Langloch aufgenommen werden.

Das Nockenprofil kann gleichzeitig auf mehrere Hebel wirkend ausgebildet sein, wobei die Nocken bzw. Ausnehmungen des Nockenprofils so gestaltet sein können, daß eine Schwenkbewegung einzelner oder aller Hebel oder eines Teils der Hebel gestattet bzw. verhindert ist. Das Nockenprofil kann auch derart ausgestaltet sein, daß kein Hebel aus seiner Verriegelungs- in seine Entriegelungsstellung oder daß ein oder mehrere Hebel in ihrer Entriegelungsstellung gehalten sind und nicht in ihre Verriegelungsstellung zurückschwenken können.

Vorteilhafterweise bildet das Nockenprofil im Anschluß an den jeweiligen Nocken eine Ausnehmung, deren Breite wenigstens der Breite des Riegels und deren Tiefe wenigstens dem Verriegelungsweg des Riegels entspricht. Dadurch ist eine Schwenkbewegung des hebelförmigen Riegels um seine Schwenkachse entweder ermöglicht oder verhindert, wobei die Ausnehmungen auch eine solche Breite haben können, daß einzelne Riegel von dem Nokkenprofil nicht beaufschlagt werden können, so daß diese von der Sperreinrichtung unbeeinträchtigt betätigt werden können.

Bei einer anderen Weiterbildung ist wenigstens einem Rahmen ein weiterer Riegel zugeordnet, der im wesentlichen ähnlich dem einen Riegel ausgebildet und diesem gegenüberliegend am Rahmen angeordnet ist. Dabei kann als weitere Sicherung ein mit dem weiteren Riegel verplombter Winkel vorgesehen sein, der fest mit dem Rahmen verbunden ist. Diese Ausführungsform stellt eine zusätzliche Sicherung der Vorrichtung dar und kann in Verbindung mit der zuvor erläuterten Sperreinrichtung aber auch unabhängig von dieser oder an deren Stelle vorgesehen sein. Die Plombe zwischen dem Winkel und dem weiteren Hebel kann von einer Aufsichtsbehörde, wie z.B. vom Finanzamt angebracht sein. Die mit einer solchen Einrichtung gesicherte Karte kann deshalb nur bei einem Zerstören der Plombe aus der Schiebeführung des Rahmens entnommen werden. Eine solche Karte kann eine sogenannte "Memory-Fiscal-Karte" enthalten oder sein, die für das Finanzamt relevante Daten speichert und/oder verarbeitet.

Günstig ist ferner, daß wenigstens einem Hebel und/oder der Sperreinrichtung ein Schalter zugeordnet ist, der die Verriegelungs- oder Entriegelungsstellung des Hebels bzw. der Sperreinrichtung erfaßt und diese vorzugsweise einer Datenverarbeitungsanlage anzeigt. Dadurch kann sich beispielsweise ein Kassierer bei einer bestimmten Registrierkasse anmelden. Außerdem ist dadurch eine ordnungsgemäße Speicherung aller Daten sowie des Datums und der Uhrzeit der Entnahme bzw. des Einsteckens der Karte möglich. Die Informationen einer Vielzahl von Karten können auf diese Weise zentral erfaßt, angezeigt und ausgewertet werden.

Vorzugsweise ist die Vorrichtung in eine Registrierkasse eingebaut, wobei die Karten mittels der Verriegelungseinrichtung, der Sperreinrichtung oder der plombierbaren mechanischen Verbindung unterschiedlich stark gesichert sind. Diese Weiterbildung hat den Vorteil, daß jede Karte nur von der dazu berechtigten Person entnommen werden kann. Vorteilhafterweise ist die lediglich mittels der Verriegelungseinrichtung gesicherte Karte eine Firmenkarte zum Anmelden einer Kassierperson an der Registrierkasse und zum Einschalten der Betriebsfunktionen der Registrierkasse. Bei einer anderen Weiterbildung ist die mittels der Verriegelungseinrichtung und der Sperreinrichtung gesicherte Karte eine Geschäftsführer-Karte, und die mittels der plombierbaren mechanischen Verbindung gesicherte Karte eine Memory-Fiscal-Karte, die beide zum Auslagern von in der Registrierkasse gespeicherten Informationen dienen. Damit ist es beispielsweise einer Kassierperson ohne ein Zerstören der Vorrichtung nicht möglich, die Geschäftsführer-Karte oder die Memory-Fiscal-Karte aus der Vorrichtung zu entnehmen und die darauf gespeicherten Informationen abzurufen. Bei einer bevorzugten Weiterbildung ist die Memory-Fiscal-Karte zusätzlich mittels der Sperreinrichtung gesichert, so daß bei einem Auswechseln dieser Karte neben einer Person der Aufsichtsbehörde auch der Geschäftsführer des Verkaufsgeschäftes anwesend sein muß.

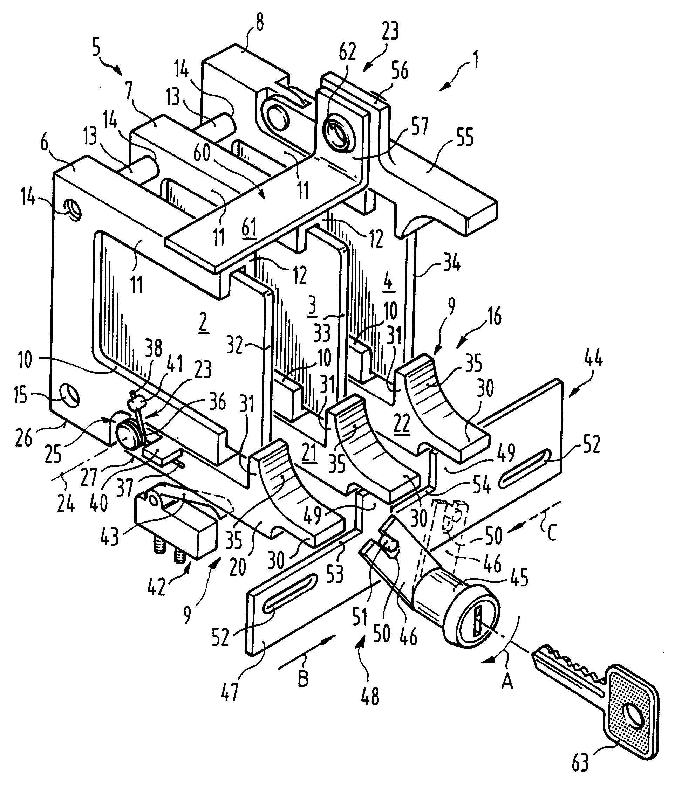

Ausführungsbeispiele des Erfindungsgegenstandes werden nachfolgend anhand der Zeichnung näher erläutert, deren einzige Figur zeigt
eine schematische perspektivische Darstellung einer Vorrichtung zum Aufnehmen von unterschiedlich gesicherten Karten.

In der einzigen Figur ist eine Vorrichtung 1 zum Aufnehmen von kartenförmigen Schaltungsträgern, insbesondere Karten 2,3 und 4 wie "integrated circuit cards with contacts" nach dem ISO-Standard 7816 aber auch solchen Karten mit kontaktloser Signalankoppelung, schematisch dargestellt, die unterschiedlich stark gesichert sind. Die Karten können als sogenannte Memory-Karten ausgebildet sein. Die Vorrichtung 1 hat einen Halter 5 mit drei Schiebeführungen oder Rahmen 6, 7, und 8, die gemäß der Figur jeweils eine mit einer Ausnehmung 10 versehene linke Seitenwand 11 haben und schlitzförmig ausgebildet sind. Die in der Figur nicht näher dargestellte rechte Seitenwand 12 kann ähnlich wie die linke Seitenwand 11 ausgebildet sein oder eine durchgehende Seitenfläche aufweisen. In der durchgehenden Seitenfläche kann nahe ihrer in Steckrichtung hinteren Kante eine nicht gezeigte bogenförmige Ausnehmung zum besseren Ergreifen einer Karte vorgesehen sein.

Gemäß der Figur sind die Rahmen 6, 7 und 8 des Halters 5 miteinander über einen nicht dargestellten Gewindebolzen verbunden, der durch eine Bohrung 14 hindurchgeführt ist, die am in Steckrichtung vorderen, oberen Ende jedes Rahmens vorgesehen ist. Jeweils zwischen zwei Rahmen ist auf den Gewindebolzen ein Abstandhalter 13 aufgesetzt, der die Rahmen zueinander parallel und auf Abstand hält. Ein weiterer Gewindebolzen kann auch an dem in Steckrichtung vorderen, unteren Ende jedes Rahmens vorgesehen (nicht näher gezeigt) und in eine entsprechende Bohrung 15 eingesetzt sein. Für eine bessere Seitenstabilität im vorderen Bereich können die Rahmen des Halters auch an ihrem in Steckrichtung hinteren Ende miteinander verbunden sein (nicht dargestellt), wobei solche Halterungen bzw. Abstandshalter sowohl am in der Zeichnung oberen als auch unteren Ende jedes Rahmens, aber auch ausschließlich oben oder unten angebracht sein können. Mit Hilfe der Gewindebolzen und Abstandshalter 13 können also beliebig viele Rahmen nebeneinander und parallel zueinander zu einem kompakten Halter 5 verbunden werden. Die Verschraubungen können aber auch in einem Bereich zwischen dem in Steckrichtung vorderen und hinteren Ende des jeweiligen Rahmens angebracht sein.

Gemäß der Figur befinden sich die Karten 2, 3 und 4 in den Rahmen 6, 7, und 8, wobei die Vorrichtung 1 außerdem eine als Halteeinrichtung ausgebildete Verriegelungseinrichtung 16 hat, mit deren Hilfe die Karten in der schlitzförmigen Schiebeführung zum Zwecke des Festlegens ihrer eingeschobenen Betriebsstellung gehalten und gegen eine Entnahme gesichert sind. Die Verriegelungseinrichtung 16 hat gemäß der Figur drei insgesamt mit 9 bezeichnete Riegel 20, 21, 22, die jeweils aus einer die Karte in ihrer Betriebsstellung blockierenden Verriegelungs- in eine Entriegelungsstellung und umgekehrt bewegbar und mit Hilfe einer Haltevorrichtung 23 in ihrer Verriegelungsstellung (siehe Figur) gehalten sind. Die Haltevorrichtung 23 kann auch entfallen, wenn der jeweilige Riegel z.B. aus einem elastischen Material besteht und fest mit seiner Schiebeführung verbunden bzw. einstückig mit dieser ausgebildet oder infolge der Schwerkraft in seiner Verriegelungsstellung gehalten ist. Bei dieser Ausführungsform ist der Riegel vorzugsweise an der Oberseite des Halters befestigt.

Jeder Riegel der Verriegelungseinrichtung 16 ist ein parallel zur Steckrichtung der Karte 2, 3, 4 sich erstreckender, in der durch die Kartenebene definierten Ebene um eine Schwenkachse 24 schwenkbarer Hebel 20, 21, 22. Jeder Hebel 20, 21, 22 ist unterhalb des Rahmens 6, 7, 8 derart am Halter 5 gelagert, daß er in einer Ausnehmung 25 des Rahmens angeordnet ist, wobei die Unterkante 26 jedes Rahmens mit der Unterkante 27 des jeweiligen Hebels fluchtet. Jeder Hebel 20, 21, 22 hat eine nahe seinem freien Ende 30 angeordnete Rastnase 31, welche die in Steckrichtung hintere Kante 32, 33, 34 jeder Karte 2, 3, 4 in ihrer Betriebsstellung hintergreift. Dabei umschließt die Rastnase gemäß der Figur die untere Ecke jeder Karte, so daß diese in ihrer Betriebsstellung gesichert ist. Jede Rastnase 31 läuft zum freien Ende 30 des Hebels 20, 21, 22 spitz zu und hat an ihrer zum freien Ende jedes Hebels weisenden Seite eine Riffelung 35.

Jeder Hebel 20, 21, 22 der Verriegelungseinrichtung 16 ist mit Hilfe der Haltevorrichtung 23 in seine in der Figur gezeigten Verriegelungsstellung vorgespannt. Die Haltevorrichtung 23 ist eine Feder 36, deren eines Ende 37 am Hebel 20 angreift und deren anderes Ende 38 z.B. am Rahmen 6 des Halters 5 befestigbar ist, sich also am Halter 5 abstützt. In der Figur ist die als Feder 36 ausgebildete Haltevorrichtung 23 lediglich bei dem linken äußeren Hebel 20 dargestellt; die beiden anderen Hebel 21, 22 haben aber eine gleiche Haltevorrichtung. Die Feder 36 ist gemäß der Figur als Drehfeder ausgebildet; sie kann aber auch eine Zug- oder Druckfeder sein. Die Drehfeder ist im Bereich der Schwenkachse 24 jedes Hebels angeordnet, wobei am Hebel 20, 21, 22 und am Halter 5 bzw. der betreffenden Schiebeführung ein jeweils ein Ende 37, 38 der Drehfeder abstützender Zapfen 40, 41 angebracht ist. Der an jedem Hebel befestigte Zapfen kann auch eine einstückig damit verbundene Platte sein (siehe Figur). Die Federenden können auch einfach in am Hebel sowie am Halter vorgesehene Bohrungen eingesetzt werden.

Gemäß der Figur ist dem Hebel 20 ein Schalter 42 zugeordnet, der die Verriegelungs- oder Entriegelungsstellung des Hebels erfaßt und diese einer nicht gezeigten Datenverarbeitungsanlage anzeigt. Das von dem Schalter abgegebene Signal kann beispielsweise auch zur Kassenelektronik einer Registrierkasse übertragen werden. Ein solcher Schalter kann aber auch den anderen Hebeln 21, 22 zugeordnet sein. Der Schalter 42 hat an seiner Oberseite einen schwenkbaren Bügel 43, der an der Unterseite 27 des Hebels 20 anliegt. Der Bügel 43 ist in Richtung auf den Hebel 20 mit Hilfe einer nicht gezeigten Drehfeder vorgespannt. Die Drehfeder des Bügels 43 kann auch so stark ausgebildet sein, daß sie den Hebel in seiner in der Figur dargestellten Betriebsstellung hält. Auch in diesem Fall kann die als Feder 36 ausgebildete Halteeinrichtung 23 entfallen. Statt des Schalters 42 kann auch eine andere Meldevorrichtung für die Stellung des Hebels, z.B. eine Lichtschranke, vorgesehen sein.

Der Schalter kann ein Mikroschalter sein, der beispielsweise der Kassenelektronik einer Registrierkasse das Vorhandensein und/oder die bevorstehende Entnahme einer Karte anzeigt. Eine solche Karte kann beispielsweise ein Firmenausweis eines Benutzers, z.B. eines Kassierers sein.

Zusätzlich zu den als einrastbare Hebel 20, 21, 22 ausgebildeten Riegeln ist der Verriegelungseinrichtung 16 eine abschließbare, gemäß der Figur auf zwei Hebel (21, 22) wirkende Sperreinrichtung 44 mit einem Schieberiegel 47 zugeordnet, der aus einer eine Bewegung des betreffenden Hebels verhindernden Sperrstellung (siehe Figur) in eine eine Bewegung des Hebels freigebende Freigabestellung und umgekehrt bewegbar ist. An der Sperreinrichtung kann ein Schalter ähnlich dem Schalter 42 angebracht sein, der deren Ver- bzw. Entriegelungszustand anzeigt. Die an den Riegeln 20, 21, 22 angebrachten Schalter können dann entfallen.

Dazu ist in einer ersten, nicht gezeigten Ausführungsform ein mit einem Schloß versehener Schwenkarm vorgesehen, der bei der Verriegelungsstellung des jeweiligen Riegels in dessen Schwenkbereich bzw. aus diesem heraus bewegbar ist. Ein solcher Schwenkarm kann jedem einzelnen hebelförmigen Riegel zugeordnet sein. Der Schwenkarm kann dabei eine Form haben, die dem mit einem Schloß 45 versehenen Schwenkarm 46 in der Figur ähnelt. Bei dieser ersten Ausführungsform ist das Schloß etwa im Bereich zwischen den freien Enden der Hebel derart angeordnet, daß die Oberkante des Schlosses nahe der durch die Unterkante des Hebels verlaufende Ebene angeordnet ist. In der Sperrstellung ist der Schwenkarm derart in den Schwenkbereich des in seiner Verriegelungsstellung gehaltenen Hebels verschwenkt, daß der Schwenkarm nunmehr etwa horizontal angeordnet ist.

Bei einer zweiten, in der Figur gezeigten Ausführungsform umfaßt die Sperreinrichtung 44 den Schieberiegel 47 mit einem Nockenprofil mit jeweils einzelnen Riegeln 21, 22 zugeordneten Nocken 49, die bei der Verriegelungsstellung des jeweiligen Riegels in dessen Schwenkbereich bzw. zur Entriegelung aus diesem heraus bewegbar sind. Die Bewegung des Nockenprofils 47 erfolgt über eine als verschiebbarer Nockenschieber ausgebildete Betätigungsvorrichtung 48, die den mit dem Schloß 45 versehenen Schwenkarm 46 und einen mit dem Nockenprofil 47 verbundenen Stift 51 hat, an dem der Schwenkarm 46 angreift. Der Schwenkarm 46 hat an seinem freien, d.h. dem Schloß 45 gegenüberliegenden Ende eine längliche Ausnehmung 50. Die längliche Ausnehmung kann auch als Langloch oder Führungsschlitz ausgebildet sein. Der mit dem Nockenprofil 47 verbundene Stift 51 greift in die längliche Ausnehmung 50 des Schwenkarmes 46 ein. Durch eine Schwenkbewegung des Schwenkarmes in Richtung des Pfeils A erfolgt eine Verschiebebewegung des Stiftes 51 und damit des Nockenprofils 47 in Richtung des Pfeils B. Die Verschiebebewegung des Nockenprofils 47 kann durch Langlöcher 52 begrenzt sein, die in dem Schieberiegel ausgebildet sind und in die nicht dargestellte Führungszapfen eingreifen.

Gemäß der Figur ist der Schieberiegel 47 gleichzeitig auf die Hebel 21, 22 wirkend angeordnet und ausgebildet, wobei das Nockenprofil im Anschluß an den jeweiligen Nocken 49 eine Ausnehmung 53, 54 bildet, deren jeweilige Breite wenigstens der Breite des freien Endes jeden Riegels (Hebels) und deren Tiefe wenigstens der Eingriffslänge von Hebel und Karte bzw. dem Verriegelungsweg des betreffenden Riegels, genauer der Eingriffslänge zwischen der Rastnase 31 und der jeweiligen Karte entspricht. Gemäß der dargestellten Ausführungsform wirkt das Nockenprofil nicht auf den linken Hebel 20, so daß dieser unabhängig von der Stellung des Nokkenprofils betätigt, d.h. in seine Entriegelungsstellung verschwenkt werden kann. Das Nockenprofil 47 kann aber auch auf sämtliche Hebel wirkend ausgebildet sein, so daß in diesem Fall drei Nocken 49 und Ausnehmungen vorgesehen sein müssen.

Die Sperreinrichtung 44 ist gemäß den beiden zuvor beschriebenen Ausführungsformen quer zur Steckrichtung der Karten schwenkbar (erste Ausführungsform) oder verschiebbar (zweite Ausführungsform), wobei die Schwenkachse des Schwenkarmes 46 im Fall der zweiten Ausführungsform unterhalb derjenigen der ersten Ausführungsform sowie unterhalb des Nockenprofils 47 liegt. Dadurch bewegt sich der Schwenkarm 46 im Falle einer Verschiebebewegung des Nockenprofils 47 in Richtung des Pfeils B aus einer gemäß der Figur nach links geneigten, durchgezogenen über seine obere Totpunktlage in eine nach rechts geneigte, gestrichelte Stellung.

Gemäß der Figur ist der rechten Karte 4 ein weiterer Riegel 55 zugeordnet, der im wesentlichen ähnlich den als Hebel 20, 21, 22 ausgebildeten Riegeln aufgebaut und dem Hebel 22 gegenüberliegend am Halter 5 angeordnet ist. Im Unterschied zu den Riegeln 20, 21, 22 hat der Riegel 55 in seinem mittleren Bereich einen einstükkig damit verbundenen, etwa rechteckigen und mit einer Durchgangsbohrung (nicht gezeigt) versehenen Vorsprung 56, der einem kurzen Schenkel 57 eines L-förmigen Winkels 60 mit geringem Abstand gegenübersteht, wobei der kurze Schenkel 57 des Winkels 60 ebenfalls eine Durchgangsbohrung 62 hat, die mit der Durchgangsbohrung des Vorsprungs 56 fluchtet. In diese Bohrungen ist ein nicht dargestellter Verriegelungsbolzen einsetzbar, der gegen unberechtigte Entnahme durch eine Plombe gesichert werden kann. Der lange Schenkel 61 des Winkels 60 ist mit dem Halter 5 unlösbar verbunden.

Die einzelnen Rahmen des Halters können symmetrisch in bezug auf ihre in Steckrichtung verlaufende Längsachse ausgebildet sein, so daß jeder Rahmen auch an seinem oberen Ende eine der Ausnehmung 25 vergleichbare Ausnehmung aufweisen kann. Dementsprechend können auch an diesem Ende Zapfen oder Stifte zum Halten eines Endes einer Feder vorgesehen sein. In Verbindung mit den Abstandhaltern 13 ergibt sich somit ein Bausatz für eine Vorrichtung zum Aufnehmen von Speicherkarten. Es ist ferner möglich, die Hebel 20, 21, 22 nicht an der Unterseite, wie in der Figur gezeigt, sondern an der Oberseite des Halters (in dieser Stellung kann die Halteeinrichtung entfallen) vorzusehen und die verplombte Verbindung zwischen dem Hebel 55 und dem Winkel 60 beispielsweise an der Unterseite des Halters 5 anzubringen. Auch ist es denkbar, die Hebel 20, 21, 22 und die vorgenannte verplombte Verbindung auf derselben Seite des Halters 5 anzuordnen oder die verplombte Verbindung wenigstens einem der Hebel 20, 21,22 zusätzlich zuzuordnen. An der Unter- und/oder Oberseite jedes Rahmens 6, 7, 8 kann zwischen der Schwenkachse 24 und dem zum Hebel weisenden Ende ein sich vertikal erstreckender Vorsprung angeordnet sein, der in eine entsprechend geformte Ausnehmung des Hebels eingreifen kann und die vertikale Schwenkbewegung jedes Hebels derart führt, daß horizontale Verschiebungen in Richtung des Pfeils B oder in umgekehrter Richtung ausgeschlossen sind. Der Einfachheit halber sind in der Zeichnung Kontaktstellen bzw. Signalübermittlungselemente der Karten und der zugeordneten Rahmen weggelassen. Der verplombte Riegel 55 kann an einer Karte vorgesehen sein, die zusätzlich durch einen der Hebel 20, 21, 22 gesichert ist, wobei die Möglichkeit besteht, einen dieser zuletzt genannten Hebel außerdem durch die Sperreinrichtung 44 zu sichern. Der weitere Riegel 55 mit der Verplombung 62 kann aber auch an einer Speicherkarte vorgesehen sein, die lediglich mit Hilfe eines nicht durch die Sperreinrichtung 44 zusätzlich gesicherten Hebels, wie z.B. des Hebels 20, verriegelt ist. Die Sperreinrichtung kann ebenso wie die Riegel bzw. Hebel auch an der Oberseite des Halters angeordnet sein. Die einzelnen Hebel 20, 21, 22 können im Bereich ihrer Schwenkachse 24 beispielsweise mit einem in herkömmlicher Weise gesicherten Bolzen am Halter 5 befestigt sein.

Nachfolgend wird der Betrieb der Vorrichtung zum Aufnehmen von Speicherkarten näher beschrieben.

Zunächst wird der Schieberiegel 47 mit dem Nockenprofil über einen Schlüssel 63 und den Schloßriegel 46 in Richtung des Pfeils B so weit verstellt, bis auch der Hebel 22 aus seiner in der Zeichnung gezeigten Verriegelungsstellung in seine Entriegelungsstellung verstellt werden kann. Zu diesem Zeitpunkt ist der weitere Riegel 55 noch nicht mit dem Winkel 60 verplombt. Anschließend wird die Karte 4 in den Rahmen 8 des Halters 5 eingesteckt, wobei der Hebel 22 und der Riegel 55 in ihre jeweilige Entriegelungsstellung verschwenkt werden. Bei vollständig eingesteckter Karte 4 schnappen der Hebel 22 bzw. der Riegel 55 zurück und legen damit ihre Verriegelungsstellung fest. Nun kann der weitere Riegel 55 von einer dazu berechtigten Person verplombt werden.

Dann wird die Karte 3 in die Schiebeführung des Rahmens 7 so weit eingesteckt, bis der Hebel 21 wieder in seine Verriegelungsstellung zurückschnappt. Durch nachfolgendes Drehen des Schlüssels 63 im Gegenuhrzeigersinn, d.h. entgegen dem Pfeil A, wird das Nokkenprofil und der gestrichelt dargestellte Schwenkarm 46 in Richtung des Pfeils C, d.h. nach links verschoben, bis die den Nocken 49 benachbarten Ausnehmungen 53, 54 zwischen den einzelnen Hebeln angeordnet sind. Die jeweiligen Nocken 49 sind nunmehr direkt unterhalb der Unterkante der Hebel 21 und 22 angeordnet, so daß eine Schwenkbewegung dieser Hebel in ihre Entriegelungsstellung nicht möglich ist. Der Schlüssel 63 kann nunmehr abgezogen und einer Aufsichtsperson ausgehändigt werden.

Die Speicherkarte 2 kann jederzeit in die Schiebeführung des Rahmens 6 eingesteckt und aus dieser durch einen nach unten gerichteten Druck auf das freie Ende des Hebels 20 zum Überwinden der Kraft der Haltevorrichtung 23 herausgezogen werden. Dieses Ausführungsbeispiel zeigt somit Karten, die unterschiedlich stark gesichert sind. Vorzugsweise wird eine solche Anordnung in Registrierkassen verwendet, wobei die nicht mit der Sperreinrichtung 44 gegen Entnehmen gesicherte Karte z.B. den Firmenausweis des Kassierers bzw. der Kassiererin darstellt. Über diese Karte meldet sich der Kassierer/die Kassiererin bei der Kasse an und setzt über die auf der Karte angeordneten integrierten Schaltkreise die Betriebsfunktionen der Kasse in Gang. Im Lauf der Kassiertätigkeit werden dann die von der betreffenden Kassierperson getätigten Abrechnungen auf der Karte gespeichert. Die zweite Schiebeführung 7 kann zur Aufnahme beispielsweise der Geschäftsführer-Karte dienen. Auf ihr werden Informationen, wie z.B. die Reihenfolge der Kassierer, Tagesumsätze etc., aufgezeichnet. Diese Karte kann nur entnommen werden, wenn die Sperreinrichtung mit Hilfe eines speziellen Schlüssels in ihre Freigabestellung verschoben werden kann. Der Schlüssel wird also lediglich dem Geschäftsführer ausgehändigt.

Die dritte schlitzförmige Führung 8 dient der Aufnahme z.B. einer "Memory-Fiscal-Karte", welche nur nach dem Öffnen der Verplombung 62 und, falls diese auch auf die Verriegelungseinrichtung für die Memory-Fiscal-Karte wirkt, zusätzlich durch ein Verschieben der Sperreinrichtung entnommen werden kann. Die Verplombung kann von dazu berechtigten Behörden, wie z.B. dem Finanzamt, vorgenommen werden. Es ist klar, daß auf den einzelnen Karten unterschiedliche Informationen abgespeichert werden können oder von den einzelnen Karten unterschiedliche Informationen bzw. Signale an eine diese Signale verarbeitende Anlage abgegeben werden können.

Soll eine der Karten 2, 3, 4 aus dem Halter 5 entnommen werden, so muß -ggf. nach Öffnen der Sperreinrichtung 44- der zugehörige Riegel 20, 21, 22, 55 außer Eingriff mit der Karte gebracht werden. Dabei wird der dem Riegel zugeordnete Schalter betätigt. Dieser bewirkt, daß eventuell in der Kassenelektronik laufende Datenverarbeitungsvorgänge ordnungsgemäß beendet und alle abzuspeichernden Informationen und/oder der Entnahmezeitpunkt auf der Karte abgespeichert werden. Da dies normalerweise im Bruchteil einer Sekunde geschieht, ist der Abspeichervorgang beendet, bevor die Signalübermittlungsverbindung zu der Karte durch deren Herausziehen aus dem Halter 5 unterbrochen wird.

Mit Hilfe der Verriegelung bzw. Sperrung ist eine ordnungsgemäße Abspeicherung aller Daten auch in verschiedenen Sicherheitsstufen möglich.

## Patentansprüche

1. Vorrichtung zur Aufnahme von kartenförmigen Schaltungsträgern, insbesondere Chip-Karten (2,3,4) mit integrierten Schaltkreisen, mit einer der Anzahl der aufzunehmenden Karten entsprechenden Anzahl von Steckfächern (6,7,8), in die jeweils eine Karte in Richtung der Kartenebene einsteckbar ist, und mit Mitteln zum Sichern der Karten in ihrer eingesteckten Betriebsstellung, die je einen einer Karte (2,3,4) zugeordneten, zwischen einer aus der Kartenebene herausgeschwenkten Entriegelungsstellung und einer in die Kartenebene geschwenkten, eine Verriegelungskante einer eingesteckten Karte hintergreifenden Verriegelungsstellung schwenkbaren Riegel (20, 21, 22) umfassen, dadurch **gekennzeichnet,** daß den Mitteln zum Sichern der Karten eine abschließbare, auf wenigstens einen Riegel (20, 21, 22) wirkende Sperreinrichtung (44) zugeordnet ist, die aus einer eine Bewegung des Riegels aus der Verriegelungseinstellung verhindernden Sperrstellung in eine eine Bewegung des Riegels freigebende Freigabestellung und umgekehrt bewegbar ist.

2. Vorrichtung nach Anspruch 1, dadurch **gekennzeichnet,** daß die Sperreinrichtung (44) einen mit einem Schloß (45) versehenen Schieberiegel (47) umfaßt, der bei der Verriegelungsstellung des jeweiligen Riegels (20, 21, 22) in dessen Schwenkbereich (Sperrstellung) bzw. aus diesem heraus (Freigabestellung) bewegbar ist.

3. Vorrichtung nach Anspruch 2 mit mehreren Rahmen und jeweils zugeordneten Riegel, dadurch **gekenn****zeichnet,** daß der Schieberiegel (47) ein Nockenprofil mit mehreren jeweils einem Riegel (20, 21, 22) zugeordneten Nocken (49) hat, die bei der Verriegelungsstellung des jeweiligen Riegels in dessen Schwenkbereich bzw. aus diesem heraus bewegbar sind.

4. Vorrichtung nach Anspruch 3, dadurch **gekennzeich****net,** daß der Schieberiegel (47) mittels einer Betätigungsvorrichtung (48) verschiebbar ist.

5. Vorrichtung nach Anspruch 4, dadurch **gekennzeich****net,** daß die Betätigungsvorrichtung (48) einen mit einem Schloß (45) versehenen Schwenkarm (46) und einen mit dem Schieberiegel (47) verbundenen Stift (51) hat, an dem der Schwenkarm (46) angreift.

6. Vorrichtung nach Anspruch 5, dadurch **gekennzeich****net,** daß der Schwenkarm (46) zur Aufnahme des Stiftes (51) einen Führungsschlitz oder eine längliche Ausnehmung (50) hat.

7. Vorrichtung nach einem der Ansprüche 1 bis 6, dadurch **gekennzeichnet,** daß der Schieberiegel (47) quer zur Steckrichtung der Karte(n) (2,3,4) verschiebbar ist.

8. Vorrichtung nach einem der vorhergehenden Ansprüche, dadurch **gekennzeichnet,** daß bei Vorhandensein mehrerer Rahmen (6, 7, 8) mit jeweils zugeordnetem Riegel (20, 21, 22) wenigstens einer Karte (4) ein weiterer Riegel (55) zugeordnet ist, der im wesentlichen ähnlich dem einen Riegel (22) ausgebildet und diesem gegenüberliegend am Rahmen (8) angeordnet ist.

9. Vorrichtung nach einem der vorhergehenden Ansprüche, dadurch **gekennzeichnet,** daß wenigstens einer der Riegel (55) durch eine plombierbare mechanische Verbindung (56, 61, 62) in seiner Verriegelungsstellung fixierbar ist und daß diese Verbindung (56, 61, 62) zusätzlich zu oder anstelle der Sperreinrichtung (44) vorgesehen ist.

10. Vorrichtung nach einem der vorhergehenden Ansprüche, dadurch **gekennzeichnet,** daß wenigstens einem der Riegel (20, 21, 22, 55) und/oder der Sperreinrichtung (44) ein Schalter (42) zugeordnet ist, der die Verriegelungs- oder Entriegelungsstellung des Hebels (20, 21, 22, 55) bzw. der Sperreinrichtung (44) erfaßt und diese vorzugsweise einer Datenverarbeitungsanlage anzeigt.

11. Vorrichtung nach den Ansprüchen 9 oder 10, dadurch **gekennzeichnet,** daß jedes Einsteckfach Signalübertragungskontakte für die Verbindung der integrierten Schaltkreise der eingesteckten Karte mit Betriebsfunktionselementen eines der Vorrichtung zugeordneten elektronischen Gerätes hat.

12. Vorrichtung nach Anspruch 11, dadurch **gekennzeich****net,** daß die Vorrichtung einer Registrierkasse zugeordnet ist, und daß die Einsteckfächer zur Aufnahme von Karten entsprechend einer hierarchischen Über- bzw. Unterordnung bestimmter geschäftlicher Funktionen (Kassierer, Geschäftsführer, Fiskalspeicher) ausgebildet sind, wobei hierarchisch tieferstehende Karten durch einen der Riegel (20, 21, 22) allein, höherstehende Karten zusätzlich durch die Sperreinrichtung (44) und die höchststehende durch den weiteren Riegel (55) und/oder durch die plombierbare Verbindung (56, 61, 62) gesichert sind.

## Claims

1. Device for receiving circuit carriers in card form, in particular chip cards (2, 3, 4) with integrated circuits, having a number of insert receptacles (6, 7, 8) corresponding to the number of cards to be received, into which receptacles a card can in each case be inserted in the direction of the plane of the card, and having means for protecting the cards in their inserted operating position, which each comprise a bar (20, 21, 22) which is assigned to a card (2, 3, 4) and can be pivoted between an unlocking position, pivoted out of the plane of the card, and a locking position, pivoted into the plane of the card and engaging behind a locking edge of an inserted card characterised in that the means for protecting the cards are assigned a closable blocking device (44) which acts on at least one bar (20, 21, 22) and which can be moved out of a blocking position, preventing a movement of the bar out of the locking setting, into a release position, releasing a movement of the bar, and vice versa.

2. Device according to Claim 1, characterised in that the blocking device (44) comprises a sliding bar (47) which is provided with a lock (45) and which, in the locking position of the respective bar (20, 21, 22), can be moved into (blocking position) and out of (release position) its pivoting range.

3. Device according to Claim 2 having a plurality of frames and respectively assigned bars, characterised in that the sliding bar (47) has a cam profile having a plurality of cams (49) which are respectively assigned to a bar (20, 21, 22) and which, in the locking position of the respective bar, can be moved into and out of its pivoting range.

4. Device according to Claim 3, characterised in that the sliding bar (47) is displaceable by means of an actuating device (48).

5. Device according to Claim 4, characterised in that the actuating device (48) has a pivoting arm (46), which is provided with a lock (45), and a pin (51), which is connected to the sliding bar (47) and on which the pivoting arm (46) acts.

6. Device according to Claim 5, characterised in that the pivoting arm (46) has a guide slot or an elongate clearance (50) for receiving the pin (51).

7. Device according to one of Claims 1 to 6, characterised in that the sliding bar (47) is displaceable transversely to the inserting direction of the card(s) (2, 3, 4).

8. Device according to one of the preceding claims, characterised in that in the presence of a plurality of frames (6, 7, 8) with respectively assigned bar (20, 21, 22), at least one card (4) is assigned a further bar (55), which is essentially designed similarly to the one bar (22) and is arranged opposite the latter on the frame (8).

9. Device according to one of the preceding claims, characterised in that at least one of the bars (55) can be fixed in its locking position by a lead-sealable mechanical connection (56, 61, 62) and in that this connection (56, 61, 62) is provided in addition to or instead of the blocking device (44).

10. Device according to one of the preceding claims, characterised in that at least one of the bars (20, 21, 22, 55) and/or the blocking device (44) is assigned a switch (42) which senses the locking or unlocking position of the lever (20, 21, 22, 55) or of the blocking device (44) and indicates this, preferably to a data processing system.

11. Device according to Claim 9 or 10, characterised in that each insert receptacle has signal transmitting contacts for the connection of the integrated circuits of the inserted card to operating function elements of an electronic unit assigned to the device.

12. Device according to Claim 11, characterised in that the device is assigned to a cash register, and in that the insert receptacles are designed for receiving cards corresponding to a hierarchical superordination or subordination of certain business functions (cashier, manager, fiscal memory), hierarchically lower cards being protected by one of the bars (20, 21, 22) alone, higher cards being additionally protected by the blocking device (44) and the highest card being protected by the further bar (55) and/or by the lead-sealable connection (56, 61, 62).

## Revendications

1. Dispositif de réception de supports de raccordement sous forme de carte, notamment de cartes à puce (2,3,4) à circuits intégrés, comportant un nombre de volets d'enfichage (6,7,8) qui correspond au nombre de cartes à recevoir, volets d'enfichage dans lesquels une carte peut-être enfichée dans la direction du plan de la carte, et comportant des moyens assurant la position de fonctionnement enfichée de la carte, moyens qui comprennent respectivement une barre (20,21,22) qui est associée à une carte, (2,3,4) et qui est susceptible de pivoter entre une position de déverrouillage, tournant à partir de plan de la carte, et une position de verrouillage, bloquant un bord de verrouillage d'une carte enfichée et tournant dans le plan de la carte, caractérisé en ce qu'aux moyens d'assurance des cartes est associé un dispositif d'arrêt (44) verrouillable qui agit sur au moins une barre (20,21,22) et qui peut être mis en mouvement d'une position de blocage empêchant un mouvement de la barre à partir de la position de verrouillage, dans une position de déblocage permettant un mouvement de la barre, et inversement.

2. Dispositif suivant la revendication 1, caractérisé en ce que le dispositif d'arrêt (44) comporte une barre coulissante (47) qui est munie d'une serrure (45) et qui, pour la position de verrouillage de la barre respective (20,21,22), peut être mise en mouvement dans la zone de rotation de la barre (position de blocage) ou à partir de cette zone (position de déblocage).

3. Dispositif suivant la revendication 2 comportant plusieurs cadres et barres associée, caractérisé en ce que la barre coulissante (47) a un profil de came comportant plusieurs cames (49) qui sont associées à une barre (20,21,22) et qui, pour la position de verrouillage de la barre respective, peuvent être mises en mouvement dans la zone de rotation de la barre ou à partir de cette zone.

4. Dispositif suivant la revendication 3, caractérisé en ce que la barre coulissante (47) est déplacable au moyen d'un dispositif de manoeuvre (48).

5. Dispositif suivant la revendication 4, caractérisé en ce que le dispositif de manoeuvre (48) comporte un bras pivotant (46) muni d'une serrure (45) et une cheville (51) qui est fixée à la barre coulissante (47) et sur laquelle s'applique le bras pivotant (46).

6. Dispositif suivant la revendication 5, caractérisé en ce que le bras pivotant (46) comporte, pour le logement de la cheville (51), une fente de guidage ou un creux longitudinal (50).

7. Dispositif suivant l'une des revendication 1 à 6, caractérisé en ce que la barre coulissante (47) est déplacable transversalement par rapport au sens d'enfichage de la carte (2,3,4).

8. Dispositif suivant l'une des revendications précédentes, caractérisé en ce que, dans le cas de la présence de plusieurs cadres (6,7,8) à barres associées (20,21,22), une autre barre (55) est associée à au moins une carte (4), barre qui est formée essentiellement de manière semblable à la première barre (22) et qui est disposée, dans le cadre (8), de manière opposée à la première barre (22).

9. Dispositif suivant l'une des revendications précédentes, caractérisé en ce qu'au moins une des barres (55) peut être fixée dans sa position de verouillage par une liaison (56,61,62) mécanique plombable, et que cette liaison (56,61,62) est prévue en plus ou à la place du dispositif d'arrêt (44).

10. Dispositif suivant l'une des revendications précédentes, caractérisé en ce qu'à au moins une des barres (20,21,22,55) et/ou au dispositif d'arrêt (44) est associé un commutateur (42) qui détecte la position de verrouillage ou de déverrouillage de la barre (20,21,22,55) ou du dispositif d'arrêt (44) et qui indique cette position de préférence à une installation de traitement de données.

11. Dispositif suivant la revendication 9 ou 10, caractérisé en ce que chaque volet d'enfichage comporte des contacts de transmission de signaux pour la liaison des circuits intégrés de la carte enfichée avec des éléments, à fonction de mise en service, d'un appareil électronique associé au dispositif

12. Dispositif suivant la renvendication 11, caractérisé en ce qu'il est associé à une caisse enregistreuse et que les volets d'enfichage pour la réception des cartes sont agencés en fonction d'un classement hierarchique supérieur ou inférieur de fonctions commerciales déterminées (caissier, gérant, expert comptable), du type dans lequel des cartes placées hierarchiquement en contre bas sont asssurées seulement par une des barres (20,21,22) alors que des cartes placées plus haut sont assurées en plus par le dispositif d'arrêt (44) et des cartes placées le plus haut sont assurées en plus par l'autre barre (55) et/ou par la liaison plombable (56,61,62).
